(19) Europäisches Patentamt / European Patent Office / Office européen des brevets

(11) **EP 4 651 072 A1**

(12) **EUROPEAN PATENT APPLICATION**
published in accordance with Art. 153(4) EPC

(43) Date of publication:
**19.11.2025 Bulletin 2025/47**

(21) Application number: **24922668.9**

(22) Date of filing: **06.03.2024**

(51) International Patent Classification (IPC):
*G06T 5/70* (2024.01)    *G06T 5/00* (2024.01)

(86) International application number:
**PCT/CN2024/080401**

(87) International publication number:
**WO 2025/184844 (11.09.2025 Gazette 2025/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **VeriSilicon Microelectronics (Chengdu) Co., Ltd.**
  **Chengdu, Sichuan 610041 (CN)**
- **VeriSilicon Microelectronics (Shanghai) Co., Ltd.**
  **Shanghai 201203 (CN)**
- **VeriSilicon Microelectronics (Nanjing) Co., Ltd.**
  **Nanjing, Jiangsu 211500 (CN)**

(72) Inventors:
- **HUANG, Fang**
  **Chengdu, Sichuan 610041 (CN)**
- **HE, Huali**
  **Chengdu, Sichuan 610041 (CN)**
- **KONG, Xiaodong**
  **Shanghai 201203 (CN)**
- **ZHOU, Lei**
  **Shanghai 201203 (CN)**
- **YANG, Pingzhong**
  **Shanghai 201203 (CN)**

(74) Representative: **Ponti & Partners, S.L.P**
**Edifici PRISMA**
**Av. Diagonal núm. 611-613, Planta 2**
**08028 Barcelona (ES)**

(54) **NOISE REDUCTION METHOD AND APPARATUS, AND ELECTRONIC DEVICE AND COMPUTER-READABLE STORAGE MEDIUM**

(57) The present disclosure relates to a denoising method, a denoising apparatus, an electronic device and a computer-readable storage medium, wherein the method includes: performing filtering on a residual image of an image generate a filtered image, wherein the residual image is a difference value of the image at different resolutions, the image is corresponding to at least two residual images, and the at least two residual images have a preset layer sequence relationship therebetween; performing enhancement on a weak edge region in the filtered image, and performing attenuation on a strong edge region in the filtered image, so as to generate a sharpened image; and obtaining a target image according to a reconstructed image and the sharpened image, wherein the reconstructed image is superposition of all residual images whose layer sequence is before the residual image. Sharpening is performed during the superposition of reconstruction, thus increasing local contrast, and enhancing edges and details, so that sharpening does not need to be performed after the image reconstruction. In addition, performing attenuation on the strong edge region may reduce noise in the strong edge region, and reduce glitches of the image.

Perform filtering on a residual image of an image to generate a filtered image, wherein the residual image is a difference value of the image at different resolutions, the image is corresponding to at least two residual images, and the at least two residual images have a preset layer sequence relationship therebetween — S110

Perform enhancement on a weak edge region in the filtered image, and perform attenuation on a strong edge region in the filtered image, so as to generate a sharpened image — S120

Obtain a target image according to a reconstructed image and the sharpened image, wherein the reconstructed image is superposition of all residual images whose layer sequence is before the residual image — S130

FIG. 1

EP 4 651 072 A1

## Description

## Technical Field

The present disclosure relates to the technical field of image processing, and specifically to a denoising method, a denoising apparatus, an electronic device and a computer-readable storage medium.

## Background Art

In application scenarios of image sensors such as CMOS Sensor (complementary Metal-Oxide-Semiconductor Sensor), CCD Sensor (Charge-Coupled Device Sensor) of mobile phones, video surveillance and so on, it is generally necessary to perform spatial domain denoising on images, so as to improve signal-to-noise ratio of output images. However, after denoising, images become blurry, definition of the images is low, and subsequent sharpening algorithm is generally needed to improve the definition of the images. In addition, the denoising algorithm usually selected has an edge-preserving property, and denoising strength at strong edges of images is often insufficient, and more noise may remain at the strong edges of images, thus causing "aliasing" at the edges.

## Summary

In view of this, the present disclosure aims at providing a denoising (noise reduction) method, a denoising apparatus, an electronic device and a computer-readable storage medium, so as to address the shortcoming of poor definition of denoised images generated by existing denoising methods.

In the first aspect, the present disclosure provides a denoising method, wherein the method includes steps of: performing filtering on a residual image of an image to generate a filtered image, wherein the residual image is a difference value of the image at different resolutions, the image is corresponding to at least two residual images, and the at least two residual images have a preset layer sequence relationship therebetween; performing enhancement on a weak edge region in the filtered image, and performing attenuation on a strong edge region in the filtered image, so as to generate a sharpened image; and obtaining a target image according to a reconstructed image and the sharpened image, wherein the reconstructed image is superposition of all residual images whose layer sequence is before the residual image.

In the above embodiment, sharpening is performed during the reconstruction of the to-be-denoised image, thus increasing local contrast of the image, and enhancing edges and details of the image, so that sharpening does not need to be performed after the image reconstruction, and an implementation process is simpler and more convenient. In addition, performing attenuation on the strong edge region may reduce noise in the strong edge region, and reduce glitches of the image.

In an optional embodiment of the present disclosure, the step of obtaining a target image according to the reconstructed image and the sharpened image includes steps of: constructing a guide image and a noisy image according to the reconstructed image and the sharpened image; performing denoising on the noisy image according to the guide image, so as to obtain a denoised image; and performing upsampling on the denoised image, so as to obtain the target image.

In the above embodiments, the guide image and the noisy image can be quickly and simply constructed. By using the guide image, more weight can be given to the strong edge region, and denoising strength at the strong edge in the image is enhanced. The noisy image is a superposition result of sharpened residual images, which increases local contrast of the image, enhances edges and details of the image, and enables the generated image to be clearer and sharper.

In an optional embodiment of the present disclosure, the method further includes steps of: assigning a value to the filtered image based on a preset threshold interval, so as to acquire the weak edge region; and assigning a value to the filtered image based on a preset threshold, so as to acquire the strong edge region.

In the above embodiment, by assigning a value through preset thresholds, a strong edge region and a weak edge region in an image can be quickly and simply acquired.

In an optional embodiment of the present disclosure, the sharpened image includes a weak edge region image, and the step of performing enhancement on a weak edge region in the filtered image includes a step of: performing enhancement on the weak edge region using a preset first scalar, and retaining other parts in the filtered image except the weak edge region, so as to generate the weak edge region image.

In the above embodiment, enhancement on the weak edge region can be quickly realized through the scalar, and meanwhile other parts except the weak edge region are retained, so that the generated weak edge region image has more image details.

In an optional embodiment of the present disclosure, the sharpened image includes a strong edge region image, and the step of performing attenuation on a strong edge region in the filtered image includes a step of: performing attenuation on the strong edge region using a preset second scalar, and retaining other parts in the filtered image except the strong edge region, so as to generate the strong edge region image.

In the above embodiment, attenuation on the strong edge region can be quickly realized through the scalar, and meanwhile other parts except the strong edge region are retained, so that the generated strong edge region image has more image details.

In an optional embodiment of the present disclosure, the sharpened image includes a weak edge region image and a strong edge region image, and the step of constructing a guide image and a noisy image according to the reconstructed image and the sharpened image includes steps of: adding the weak edge region image to the reconstructed image to obtain the noisy image; and adding the strong edge region image to the reconstructed image to obtain the guide image.

In an optional embodiment of the present disclosure, the step of performing denoising on the noisy image according to the guide image, so as to obtain a denoised image includes steps of: calculating a weight parameter of bilateral filtering based on the guide image; and performing denoising on the noisy image according to the weight parameter, so as to generate the denoised image.

In the above embodiment, denoising is performed on the noisy image by calculating the weight of bilateral filtering through the guide image, thus enhancing the denoising strength at the strong edge of the image, relieving the sense of glitch at the strong edge of the image after the denoising of the edge-preserving denoising algorithm, and meanwhile sharpening is also performed during the denoising, so as to enhance the details of the image.

In the second aspect, the present disclosure further provides a denoising method, wherein the method includes steps of: acquiring a plurality of residual images of an image, wherein each residual image is a difference value of the image at different resolutions, and the plurality of residual images have a preset layer sequence; and superposing the plurality of residual images in sequence for multiple times according to the layer sequence, so as to generate a denoised image of the image, wherein at least one of the multiple times of superposing includes: performing attenuation on a strong edge region in a filtered image corresponding to a residual image of current layer, and performing enhancement on a weak edge region, so as to generate a sharpened image; and obtaining a reconstructed image of the current layer according to a reconstructed image of an upper layer and the sharpened image.

In the above embodiment, sharpening is performed on the superposed image during the superposition of each layer of residual image of the to-be-denoised image, thus increasing local contrast of the image, and enhancing edges and details of the image, so that sharpening does not need to be performed after the subsequent image reconstruction, and the implementation process is simpler and more convenient. In addition, performing attenuation on the strong edge region may reduce noise in the strong edge region, and reduce glitches of the image.

In an optional embodiment of the present disclosure, the step of superposing the plurality of residual images in sequence for multiple times according to the layer sequence so as to generate a denoised image includes steps of: starting from a target residual image in the plurality of residual images, performing multiple rounds of iterations according to the layer sequence, until iteration of the residual image of a lowest layer sequence is performed, and ceasing the iterations, wherein a reconstructed image of the last round is the denoised image, and the target residual image refers to a residual image of a third layer sequence, wherein each round of iteration includes: performing filtering on a residual image of a current round of iteration to generate a filtered image of the current round of iteration; performing attenuation on the strong edge region in the filtered image of the current round of iteration, and performing enhancement on the weak edge region to generate a sharpened image of the current round of iteration; and obtaining a reconstructed image of the current round of iteration according to the reconstructed image of the last round and the sharpened image of the current round of iteration.

In the above embodiment, a plurality of residual images of an image may be quickly reconstructed by an iteration method, so as to obtain the denoised image.

In an optional embodiment of the present disclosure, a method of generating a reconstructed image of a previous round of iteration of a first round of iteration in the multiple rounds of iterations includes steps of: performing first filtering on a first residual image to generate a first filtered image, wherein the first residual image is a residual image of a highest layer sequence; performing second filtering on a second residual image to generate a second filtered image, wherein the first filtering is different from the second filtering, and the second residual image is an image one layer lower the first residual image; performing attenuation on a strong edge region in the second filtered image, and performing enhancement on the weak edge region, so as to generate a corresponding second sharpened image; and obtaining the reconstructed image of the previous round of iteration of the first round of iteration in the multiple rounds of iterations according to the first filtered image and the second sharpened image.

In the third aspect, embodiments of the present disclosure provide a denoising apparatus, wherein the apparatus includes: a filtering module, configured to perform filtering on a residual image of an image to generate a filtered image, wherein the residual image is a difference value of the image at different resolutions, the image is corresponding to at least two residual images, and the at least two residual images have a preset layer sequence relationship therebetween; a sharpening module, configured to perform enhancement on a weak edge region in the filtered image, and perform attenuation on a strong edge region in the filtered image, so as to generate a sharpened image; and a generating module, configured to obtain a target image according to the reconstructed image and the sharpened image, wherein .the reconstructed image is superposition of all residual images of a layer sequence before the residual image.

In the fourth aspect, embodiments of the present disclosure provide an electronic device, including: a memory and a processor, wherein the processor and the memory are connected; the memory is used to store program; and the processor is used to call the programs stored in the memory, so as to implement the method according to any one of the first aspect.

In the fifth aspect, embodiments of the present disclosure provide a computer-readable storage medium, storing computer programs thereon, wherein the computer programs, when executed by a processor, implements the method according to any one of the first aspect.

Other features and advantages of the present disclosure will be elaborated in the following description. The objectives and other advantages of the present disclosure can be realized and obtained through structures specifically indicated in the written description and drawings.

## Brief Description of Drawings

FIG. 1 is a flowchart of a denoising method provided in embodiments of the present disclosure;

FIG. 2 is a flowchart of another denoising method provided in embodiments of the present disclosure;

FIG. 3 is a schematic block diagram of a denoising apparatus provided in embodiments of the present disclosure; and

FIG. 4 is a schematic block diagram of an electronic device provided in embodiments of the present disclosure.

## Detailed Description of Embodiments

Hereinafter, embodiments of the present disclosure are described in detail with reference to drawings. It should be noted that, although the same elements are shown in different drawings, they will be denoted by the same reference numerals. In the following description, specific details such as detailed configuration and components are provided only to assist in comprehensively understanding embodiments of the present disclosure. Therefore, those skilled in the art should know that various changes and modifications could be made to the embodiments described herein without departing from the scope of the present disclosure. In addition, descriptions of well-known functions and constructions are omitted for clarity and conciseness. Terms described below are terms defined in consideration of functions in the present disclosure, and may differ according to users, users' intentions or habits. Therefore, definitions of the terms should be determined based on contents throughout the present description.

The present disclosure may have various modifications and various embodiments, and in the present disclosure, the embodiments are described in detail below with reference to the drawings. However, it should be understood that the present disclosure is not limited to the embodiments, but includes all modifications, equivalents and substitutes within the scope of the present disclosure.

The terms used herein in the present disclosure are merely used to describe various embodiments of the present disclosure and are not intended to limit the present disclosure. Singular forms are intended to include plural forms, unless clearly indicated otherwise in the context. In the present disclosure, it should be understood that the term "including (comprising)" or "having" indicates presence of a feature, number, step, operation, structural element, component or combinations thereof, and does not exclude the possibility of presence of one or more other features, numbers, steps, operations, structural elements, components or combinations thereof, or addition of one or more other features, numbers, steps, operations, structural elements, components or combinations thereof.

Unless defined differently, all terms used herein have the same meaning as understood by those skilled in the art to which the present disclosure belongs. Unless specifically defined in the present disclosure, terms (such as terms defined in general dictionaries) should be construed as having the same meanings as those in the context of related art, and should not be interpreted as having idealized or over formal meanings.

An electronic device according to an embodiment may be one of various types of electronic devices. The electronic device may include, for example, a portable communication device (for example, a smart phone), a computer, a portable multimedia device, a portable medical device, a camera, a wearable device or a household appliance. According to an embodiment of the present disclosure, the electronic device is not limited to the above examples.

The terms used in the present disclosure are not intended to limit the present disclosure, but are intended to include various changes, equivalents or alternatives of corresponding embodiments. In the description of the drawings, like reference numerals may be used to denote like or related elements. Singular forms of nouns corresponding to items may include one or more things unless clearly indicated otherwise in the context. As used herein, phrases such as "A or B", "at least one of A and B", "at least one of A or B", "A, B or C", "at least one of A, B and C" and "at least one of A, B or C" each may include all possible combinations of items listed together in corresponding one of the phrases. As used herein, terms such as "1st", "2nd", "first" and "second" may be used to distinguish corresponding component from another component, but not to restrict the component in other aspects (for example, importance or order). It is intended that if, with or without the term "operably" or "communicatively", an element (for example, a first element) is referred to as being "coupled with", "coupled to", "connected with" or "connected to" another element (for example, a second element), it indicates that this element may be coupled with the another element directly (for example, wired), wirelessly or via a third element.

As used herein, the term "module" may include units implemented by hardware, software or firmware, and may be used interchangeably with other terms (for example, "logic", "logic block", "component" and "circuit"). A module may be a single integrated component or a minimal unit or part thereof adapted to implement one or more functions. For example, according to an embodiment, the module may be implemented in the form of application specific integrated circuit (ASIC).

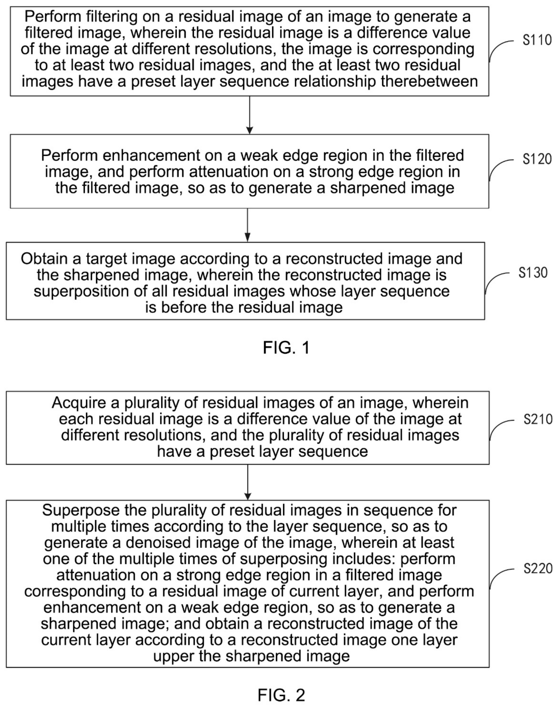

As shown in FIG. 1, FIG. 1 is a flowchart of a denoising method provided in embodiments of the present disclosure. As shown in FIG. 1, the method includes step S110 to S130.

S110, performing filtering on a residual image of an image, so as to generate a filtered image, wherein the residual image is a difference value of the image at different resolutions, the image is corresponding to at least two residual images, and the at least two residual images have a preset layer sequence relationship therebetween.

One residual image of the image is acquired, wherein this residual image is any of the residual image in a residual image set corresponding to the image. Each residual image in the above residual image set is a difference value of the image at different resolutions, and the residual images have a preset layer sequence relationship therebetween in the residual images. For convenience of distinguishing, the acquired residual image is referred to as a first residual image in the present embodiment.

Exemplarily, a plurality of residual images corresponding to a to-be-denoised image may be generated by means of Laplacian pyramid.

A method of generating a residual image set by means of Laplacian pyramid includes:

1. Constructing Gaussian pyramid. It is assumed that original resolution of a to-be-denoised image is $64 \times 64$, and the to-be-denoised image is taken as the bottommost layer (G-Level 0) of the Gaussian pyramid. Filtering is performed on this image. Exemplarily, Gaussian filtering is performed on the image. Gaussian filtering, as a method of blurring an image, reduces high frequency information of the image, and is mainly used for denoising and smoothing the image. For example, Gaussian kernel may be used to perform convolution on the to-be-denoised image, so as to implement Gaussian filtering. Then, down sampling is performed on the Gaussian-filtered image. Exemplarily, the down sampling may be performed by a nearest neighbor interpolation method: taking every other pixel in the image as a pixel point of a new image, so as to zoom out original image into a 32x32 image. This new image forms an image one layer upper the bottommost-layer image, that is, second-level image (G-Level 1), in the Gaussian pyramid. Filtering and down sampling are performed on the second-level image (G-Level 1), so that a new layer of image (G-Level 2) may be obtained. The above processes are repeated until the to-be-denoised image is scaled to a specified size, or a preset number of layers are obtained, and then the processes are stopped. After the processes are stopped, Gaussian pyramid of the to-be-denoised image may be obtained. The Gaussian pyramid includes images of multiple resolutions, which, from bottom to top, range from high-resolution images to increasingly lower-resolution images. In the embodiments of the present disclosure, the filtering method is not limited to the Gaussian filtering, and may also be other filtering methods. Likewise, the down sampling method of the Gaussian pyramid may also be a bilinear down sampling method, an area sampling method, a max pooling method, etc., and the down sampling method is not limited in the present disclosure.

2. Constructing Laplacian pyramid according to the Gaussian pyramid obtained. Herein, each layer in the Laplacian pyramid is constructed by subtracting from one layer of the Gaussian pyramid an upsampled Gaussian-blurred image of the layer above this layer. A method of constructing Laplacian pyramid includes: starting from the second-level image (G-Level 1) of the Gaussian pyramid, performing upsampling on the second-level image to obtain an image sized $64 \times 64$, performing Gaussian blur on the upsampled image to obtain a blurred image, and subtracting this blurred image from the first-level image (G-Level 0) of the Gaussian pyramid, so as to obtain a bottommost-layer image (L-Level 0) of the Laplacian pyramid, which image is a residual image. Upsampling and Gaussian blur are performed on a third-level image (G-Level 2) of the Gaussian pyramid to generate a blurred image, and this blurred image is subtracted from the second-level image of the Gaussian pyramid to obtain a second-layer image (L-Level 1) of the Laplacian pyramid. The above processes are repeated until the last layer of the Gaussian pyramid is reached, and the Laplacian pyramid of the image is acquired when the processes are stopped.

Each image in the Laplacian pyramid is a residual image, and each residual image is a difference value obtained from subtraction the to-be-noise-reduced image of different resolutions. All residual images in the Laplacian pyramid have correspondences with the to-be-denoised image, and all residual images in the Laplacian pyramid have preset layer sequences. Reconstruction of an image can be achieved through the Laplacian pyramid: starting from a minimum-size Laplacian pyramid image, performing upsampling thereon and then adding the upsampled image to the Laplacian pyramid image of a lower layer, upsampling a superposition result and then adding the upsampled superposition result to the Laplacian pyramid image of the lower layer, and repeatedly performing the superposition in an ascending direction of layer sequences, until reaching the bottommost layer of the Laplacian pyramid. After all the residual images are superposed, reconstruction of the to-be-denoised image can be realized. During the reconstruction, denoising also may be performed on the image, for example, Gaussian filtering also may be performed before the upsampling.

Exemplarily, Laplacian pyramid corresponding to a to-be-denoised image is acquired, and any layer of image in the Laplacian pyramid is chosen as a first residual image, for example, a third-layer image in the Laplacian pyramid is chosen as the first residual image.

Filtering is performed on the first residual image, so as to generate a corresponding first filtered image. The filtering may be bilateral filtering, Gaussian filtering, etc., and filtering method is not limited in the present disclosure. In an embodiment of the present disclosure, the filtering is Gaussian filtering: performing filtering on the first residual image using a 3*3 Gaussian kernel with a bandwidth of $\sigma$. A purpose of convolution is to be noise-immune, and strong and weak edges of the residual image may be avoided from noise influence.

S120, performing enhancement on a weak edge region in the filtered image, and performing attenuation on a strong edge region in the filtered image, so as to generate a sharpened image.

During image processing, edges are places where image illuminance change is significant, typically boundaries of objects or features. Edge intensity generally refers to amplitude of pixel value change in this region in the image. Thus, strong edges, corresponding to places where illuminance change is large, are usually clear, obvious boundaries or outlines, and they represent main outlines of objects or features in the image. Weak edges correspond to places where illuminance change is small, and may be blurry or unclear boundaries.

Exemplarily, the strong edge region or the weak edge region may be distinguished by calculating a gradient of pixel values, for example, using Sobel operator or simple difference for calculation.

Enhancement is performed on the weak edge region in the first filtered image, for example, high-frequency information in the image may be enhanced using a high-pass filter or a Laplacian filter, so as to enhance the weak edge. For another example, enhancement also may be performed by contrast adjustment, non-local means or the like. Specific enhancement means are not limited in the embodiments of the present disclosure.

Moreover, attenuation is performed on the strong edge region in the first filtered image, for example, the strong edge is smoothed by a bilateral filtering method, so as to attenuate the strong edge. For another example, the strong edge region also may be attenuated by a method such as Gaussian blurring or waveform compression. Specific attenuation means are not limited in the embodiments of the present disclosure.

By performing enhancement on the weak edge region, high-frequency parts of the image are enhanced, thereby increasing local contrast of the image, and enhancing edges and details of the image, so that the image looks clearer and sharper. Meanwhile, performing attenuation on the strong edge region may reduce noise in the strong edge region, and reduce glitches of the image.

In one embodiment of the present disclosure, the method further includes: assigning a value to the filtered image based on a preset threshold interval, so as to acquire the weak edge region; and assigning a value to the filtered image based on a preset threshold, so as to acquire the strong edge region.

The strong edge region may be acquired through a threshold, and then a method of acquiring a strong edge region and a weak edge region includes: presetting edge detection thresholds th1 and th2. Exemplarily, a flat region is determined as: a pixel value < th1, the weak edge region is determined as: th1 <= pixel value < th2, and the strong edge region is determined as: pixel value>= th2.

Further, an absolute value of a filtered result of the first residual image is taken and recorded as ResIntensity1. For example, by convolving the first residual image with a predefined kernel function (kernel), and then solving the absolute value, ResIntensity1 is obtained, and this value represents intensity of the residual layer. The value in the residual image can be unsigned by taking the absolute value. A single value cannot indicate whether current pixel is located in a strong edge region, a weak edge region, or a flat region.

**If** the filtering is performed on Pyr[3] using 3*3 Gaussian kernel with a bandwidth of $\sigma_1$, the filtering may be expressed as Formula 1:

$$\text{ResIntensity1} = |Pyr[3] \otimes kernel| \quad \text{Formula 1}$$

In the above, kernel represents Gaussian kernel, and *Pyr*[3] refers to the first residual image above, which is the third-layer image in the Laplacian pyramid in the present embodiment, and is thus represented by *Pyr*[3].

According to ResIntensity1 and the edge detection thresholds, it may be distinguished whether each pixel in current residual layer belongs to a flat region, a weak edge region, or a strong edge region.

For acquirement of a weak edge region, a method of assigning a value to ResIntensity1 may be used. For example, all pixels meeting th1 <= pixel value < th2 are assigned with a value of 0, and other pixels are assigned with a value of 1, which may be expressed as Formula 2:

$$\text{WeakEdge}(x, y) = \begin{cases} 0 & th1 <= ResIntensity1(x, y) < th2 \\ 1 & others \end{cases} \quad \text{Formula 2}$$

In the above, (x, y) denotes pixel coordinates.

A weak edge region image may be generated by assigning a value to ResIntensity1.

For acquirement of a strong edge region, the method of assigning a value to ResIntensity1 also may be used. For example, all pixels with pixel value >= th2 are assigned with a value of 1, and other pixels are assigned with a value of 0, which may be expressed as Formula 3:

$$\text{StrongEdge}(x, y) = \begin{cases} 1 & ResIntensity1(x, y) >= th2 \\ 0 & others \end{cases} \quad \text{Formula 3}$$

In the above, (x, y) represents pixel coordinates.

A strong edge region image is generated by assigning a value to ResIntensity1.

In the above embodiment, by assigning a value through preset thresholds, a strong edge region and a weak edge region in an image can be quickly and simply acquired.

In an embodiment of the present disclosure, the sharpened image includes a weak edge region image, and performing enhancement on a weak edge region in the filtered image includes: performing enhancement on the weak edge region using a preset first scalar, and retaining other parts in the first filtered image except the weak edge region, so as to generate the weak edge region image.

Enhancement on a residual layer of the weak edge region may be performed using the following Formula 4:

$$NewRes1 = Gain1 * Pyr[3] * WeakEdge + Pyr[3] * (1 - WeakEdge) \quad \text{Formula 4}$$

In the above, *Gain*1 is a preset scalar, *Gain*1>1. *Pyr*[3] refers to the first residual image above, which is the third-layer image in the Laplacian pyramid in the present embodiment, and is thus represented by *Pyr*[3]. *WeakEdge* represents a weak edge region, for example, it may be a weak edge region image obtained by assigning a value.

In Formula 4, the scalar (namely, Gain1) is multiplied by each pixel value in the first residual image *Pyr*[3] and weak edge region *WeakEdge,* an image of the same size as that of the original image is obtained, and in this image, the weak edge region in the first residual image is linearly zoomed in through the scalar. Further, by adding *Pyr*[3] * (1 - *WeakEdge*) to the linearly zoomed-in image, a weak edge region image is finally generated. By means of addition, other parts except the weak edge region are retained in the finally output image, and only the weak edge region is zoomed in. It should be noted that when the weak edge region is a separate weak edge region image, the enhanced weak edge region image is a part of the sharpened image.

In the above embodiment, enhancement on the weak edge region can be quickly realized through the scalar, and meanwhile other parts except the weak edge region are retained, so that the generated weak edge region image has more image details.

In an embodiment of the present disclosure, the sharpened image includes a strong edge region image, and performing attenuation on a strong edge region in the filtered image includes: performing attenuation on the strong edge region using a preset second scalar, and retaining other parts in the filtered image except the strong edge region, so as to generate the strong edge region image.

Enhancement on a residual layer of the strong edge region may be performed using the following Formula 5:

$$NewRes2 = Gain2 * Pyr[3] * StrongEdge + Pyr[3] * (1 - StrongEdge) \quad \text{Formula 5}$$

In the above, *Gain2* is a preset scalar, 0 < *Gain2* < 1. *Pyr*[3] refers to the first residual image above, which is taken as the third-layer image in the Laplacian pyramid in the present embodiment, and is thus represented by *Pyr*[3] . *StrongEdge* represents a strong edge region, for example, it may be a strong edge region image obtained by assigning a value.

In Formula 5, the scalar (namely, Gain2) is multiplied by each pixel value in the first residual image *Pyr*[3] and the strong edge region *StrongEdge,* an image of the same size as that of the original image is obtained, and in this image, the strong edge region in the first residual image is linearly zoomed out through the scalar. Further, by adding *Pyr*[3] * (1 - *StrongEdge*) to the linearly zoomed-out image, a strong edge region image is finally generated. By means of addition, other parts except the strong edge region are retained in the finally output image, and only the strong edge region is zoomed out. It should be noted that when the strong edge region is a separate strong edge region image, the attenuated strong edge region image is a part of the sharpened image.

In the above embodiment, attenuation on the strong edge region can be quickly realized through the scalar, and meanwhile other parts except the strong edge region are retained, so that the generated strong edge region image has more image details.

S130, obtaining a target image according to a reconstructed image and the sharpened image, wherein the reconstructed image is superposition of all residual images whose layer sequence is before the residual image.

The reconstructed image is acquired. The reconstructed image refers to a reconstruction result of residual images whose layer sequence is before that of the first residual image. Exemplarily, it is assumed that the Laplacian pyramid has 6 layers in total, and when the first residual image above is the third-layer image in the Laplacian pyramid, the reconstructed image is a result of reconstruction of a sixth-layer image, a fifth-layer image, and a fourth-layer image in the Laplacian pyramid. The above reconstruction may include image sharpening, superposition, denoising, and the like. For example, the residual images reconstructed to have adjacent layer sequences are superposed by the denoising method of the present embodiment.

According to the reconstructed image and the sharpened image, the target image may be obtained by executing a reconstruction process of the to-be-denoised image. For example, the reconstructed image and the sharpened image are superposed to obtain the target image. The target image may be an intermediate image the image during the denoising. For example, the target image further needs to be continuously superposed with image below the third-layer image in the Laplacian pyramid so as to obtain a denoised to-be-denoised image. Alternatively, the target image also may be the denoised to-be-denoised image. For example, when the Laplacian pyramid has only three layers, the obtained image is the denoised to-be-denoised image.

The superposed image is sharpened during the reconstruction, and by performing enhancement on the weak edge region in the superposed image, high-frequency parts of the image are enhanced, thereby increasing the local contrast of the image, and enhancing the edges and details of the image, so that the image looks clearer and sharper. Meanwhile, performing attenuation on the strong edge region can reduce noise in the strong edge region, and reduce glitches of the image.

In the above embodiment, sharpening is performed during the reconstruction of the to-be-denoised image, thus increasing the local contrast of the image, and enhancing the edges and details of the image, so that sharpening does not need to be performed after the image reconstruction, and implementation process is simpler and more convenient. In addition, performing attenuation on the strong edge region may reduce noise in the strong edge region, and reduce glitches of the image.

In one embodiment of the present disclosure, the obtaining a target image according to the reconstructed image and the sharpened image includes: constructing a guide image and a noisy image according to the reconstructed image and the sharpened image; performing denoising on the noisy image according to the guide image to obtain a denoised image; and performing upsampling on the denoised image to obtain the target image.

The guide image and the noisy image are respectively constructed according to the reconstructed image and the sharpened image. The guide image is an image for performing denoising on the noisy image. The noisy image is superposition of a part or all of images of the reconstructed image and the sharpened image. Denoising is performed on the noisy image according to the guide image, so as to obtain a denoised image. Upsampling is performed on the denoised image, and the above target image may be obtained.

Further, the sharpened image includes a weak edge region image and a strong edge region image, and the constructing a guide image and a noisy image according to the reconstructed image and the sharpened image includes: adding the weak edge region image to the reconstructed image to obtain the noisy image; and adding the strong edge region image to the reconstructed image to obtain the guide image.

The sharpened image includes a weak edge region image and a strong edge region image. The noisy image is denoted by NoisyImage, the guide image is denoted by GuideImage, and then a construction process of the two can be represented by Formulas 6:

$$NoisyImage = Up1 + NewRes1 \quad \text{Formula 6}$$

$$GuideImage = Up1 + NewRes2 \quad \text{Formula 6}$$

In the above, *NewRes*1 represents the weak edge region image, *NewRes*2 represents the strong edge region image, and *Up*1 represents the reconstructed image, which image generally needs to be upsampled. For example, when the first residual image above is the third-layer image in the Laplacian pyramid, the reconstructed image is obtained by upsampling a reconstruction result of the sixth-layer image, the fifth-layer image, and the fourth-layer image in the Laplacian pyramid. The amount of upsampling depends on the size of the residual image, that is, the size of the image generated by upsampling is consistent with the residual image, thus facilitating superposition of the reconstructed image and the sharpened image.

In the above embodiments, the guide image and the noisy image can be quickly and simply constructed. By using the guide image, more weight can be given to the strong edge region, and denoising strength at the strong edge in the image is enhanced. The noisy image is a superposition result of sharpened residual images, which increases local contrast of the image, enhances edges and details of the image, and enables the generated image to be clearer and sharper.

In an embodiment of the present disclosure, performing denoising on the noisy image according to the guide image so as to generate the noisy image includes: calculating a weight parameter of bilateral filtering based on the guide image; and performing denoising on the noisy image according to the weight parameter, so as to generate the denoised image.

Weight of bilateral filtering is calculated through the guide image, and denoising is performed on the noisy image, so as to generate the denoised image. The bilateral filtering is to jointly determine, by calculating a pixel difference Img(x, y)-Img(x+k1, y+k2) between a pixel value of current point (x, y) and a pixel value of another point (x+k1, y+k2) in a neighborhood of the current point as well as a position difference of the pixel points, a weighted weight value of a point in the neighborhood of the pixel point (x, y) during the filtering.

Denoising result is recorded as NR2, and the denoising process may be represented by Formula 7:

$$NR2(x,y) = \frac{\sum_{k1=-r}^{r}\sum_{k2=-r}^{r}e^{-\frac{|GuideImage(x,y)-GuideImage(x+k1,y+k2)|^2}{\sigma1^2}} * e^{-\frac{|k1|^2+|k2|^2}{\sigma2^2}} * NoisyImage(x+k1,y+k2)}{\sum_{k1=-r}^{r}\sum_{k2=-r}^{r}e^{-\frac{|GuideImage(x,y)-GuideImage(x+k1,y+k2)|^2}{\sigma1^2}} * e^{-\frac{|k1|^2+|k2|^2}{\sigma2^2}}}$$

Formula 7

In the above, k1 represents an offset value of row-direction coordinate of the pixel point, a value range of k1 is [-r, r], k2 represents an offset value of column-direction coordinate of the pixel point, a value range of k2 is [-r, r], r represents a value radius, and $x+k1, y+k2$ means that points are taken in a neighborhood with a radius r, with the current point (x, y) as a center. NoisyImage represents noisy image, e is an exponential function, $\sigma_1$ and $\sigma_2$ both represent bandwidth of Gaussian function, for controlling magnitude of denoising strength, $\sigma_1$ is bandwidth of Gaussian function associated with the pixel value, and $\sigma_2$ is bandwidth of Gaussian function associated with pixel coordinate distance.

NR2(x, y) represents a denoised image, which is a result of weight-averaging, by the weight calculated by the bilateral filtering, of points in the neighborhood of (x, y) with the pixel point (x, y) as a center, as a denoising result of point (x, y).

In the above embodiment, denoising is performed on the noisy image by calculating the weight of bilateral filtering through the guide image, thus enhancing the denoising strength at the strong edge of the image, relieving the sense of glitch at the strong edge of the image after the denoising of the edge-preserving denoising algorithm, and meanwhile sharpening is also performed during the denoising, so as to enhance the details of the image.

The above embodiment shown in FIG. 1 is suitable for processing the residual image of an adjacent layer sequence during the image reconstruction. If other residual images of the image are processed by other methods, a denoised image finally obtained through reconstruction may not render an optimal effect. Based on this, the present disclosure further provides a second embodiment as shown in FIG. 2, in which embodiment, the denoising method as shown in FIG. 1 is used for residual images of each adjacent layer sequence, so that a reconstructed image has a better effect.

As shown in FIG. 2, FIG. 2 is a flowchart of another denoising method shown in embodiments of the present disclosure. As shown in FIG. 2, the method includes step S210 to S220:

S210, acquiring a plurality of residual images of an image, wherein each residual image is a difference value of the image at different resolutions, and the plurality of residual images have a preset layer sequence.

All residual images corresponding to the to-be-denoised image are acquired. Each residual image is a difference value of the image at different resolutions, and the residual images have a preset layer sequence relationship therebetween. Exemplarily, Laplacian pyramid of the to-be-denoised image is acquired, wherein the Laplacian pyramid consists of a plurality of residual images, and the residual images in the Laplacian pyramid have a preset layer sequence relationship therebetween.

S220, superposing the plurality of residual images in sequence for multiple times according to the layer sequence, so as to generate a denoised image of the image, wherein at least one of the multiple times of superposing includes: performing attenuation on a strong edge region in a filtered image corresponding to a residual image of current layer, and performing enhancement on a weak edge region, so as to generate a sharpened image; and obtaining a reconstructed image of the current layer according to a reconstructed image of an upper layer and the sharpened image.

All residual images corresponding to the to-be-denoised image are superposed in sequence according to the layer sequence, and the denoised image is generated. For example, there are three layers of residual images in total, a third-level image and a second-level image are superposed to obtain a superposition result, and this superposition result is superposed with a first-level image to generate the denoised to-be-denoised image.

In the above, during the superposition of some images of adjacent layer levels, a filtered image of current layer sequence is acquired, wherein this filtered image is obtained by performing filtering on the residual image of the current layer sequence. Exemplarily, there are six residual images in total, the residual images are superposed from the topmost layer, when it comes to a third layer, a residual image of the current layer, that is, the third layer, is acquired, and this image is filtered, so as to generate a filtered image of the current layer. Attenuation is performed on a strong edge region in the filtered image of the current layer, and enhancement is performed on a weak edge region, so as to generate a sharpened image of the current layer. A reconstructed image of a layer upper the current layer is acquired, wherein the reconstructed image is superposition of all images above the current layer, for example, when the current layer is a third-layer residual image, a reconstructed image of an upper layer, i.e. a fourth layer, is acquired, wherein the reconstructed image of the fourth layer is an image generated by processing and superposing residual images of a sixth layer, a fifth layer and the fourth layer. Reconstruction is performed according to the reconstructed image of an upper layer and the sharpened image of the current layer to generate the reconstructed image of the current layer.

In the above embodiment, sharpening is performed on the superposed image during the superposition of each layer of residual image of the to-be-denoised image, thus increasing local contrast of the image, and enhancing edges and details of the image, so that sharpening does not need to be performed after the subsequent image reconstruction, and the implementation process is simpler and more convenient. In addition, performing attenuation on the strong edge region may reduce noise in the strong edge region, and reduce glitches of the image.

In an embodiment of the present disclosure, the superposing the plurality of residual images in sequence for multiple times according to the layer sequence, so as to generate a denoised image includes: starting from a target residual image in the plurality of residual images, performing multiple rounds of iterations according to the layer sequence, until iteration of the residual image of a lowest layer sequence is performed, and ceasing the iterations. A reconstructed image of last round is the denoised image. The target residual image refers to a residual image of a third layer sequence. In the above, each round of iteration includes: performing filtering on a residual image of a current round of iteration, so as to generate a filtered image of the current round of iteration; performing attenuation on a strong edge region in the filtered image of the current round of iteration, and performing enhancement on a weak edge region, so as to generate a sharpened image of the current round of iteration; and obtaining a reconstructed image of the current round of iteration according to the reconstructed image of the last round of iteration and the sharpened image of the current round of iteration.

Residual image processing and superposition may be performed in an iteration manner, and an iteration method includes:

starting from a target residual image in a plurality of residual images, performing multiple rounds of iterations in a descending order of layer sequences, wherein the target residual image refers to an image where iteration begins, and is usually a residual image layer of a third layer sequence of the residual images. In other embodiments of the present disclosure, it may also be other layers of the residual images. The residual image of the third layer sequence is used as the target residual image, and iterations start to be performed from the target residual image, until iteration of the residual image of the lowest layer sequence is completed, and iteration is stopped. At this point, a reconstructed image generated during the last round of iteration is the denoised image. Exemplarily, the residual images are in a form of Laplacian pyramid, wherein the Laplacian pyramid has six layers in total, and starting from the topmost layer to the bottommost layer, layer sequence numbers of the residual images are 5 to 0 in sequence, and then iterations start to be performed from the residual image of the third layer sequence (i.e., residual image numbered 3), until iteration of the residual image of the bottommost layer (i.e., residual image numbered 0) is performed.

In the above, the iteration includes: acquiring a residual image of a current round of iteration. Exemplarily, assuming that it is current a first round of iteration, when the residual image of the current round is a residual image of a third layer sequence, this residual image is acquired and filtering is performed on this image, so as to generate a filtered image of the current round of iteration.

Attenuation is performed on a strong edge region in the filtered image of the current round, and enhancement is performed on a weak edge region, so as to generate a sharpened image of the current round.

A reconstructed image of a previous round of iteration is acquired. The reconstructed image of each round is a result generated by processing and superposing all residual images before the residual image of the current round. When the residual image of the current round is the residual image of the third layer sequence, the reconstructed image of the previous round is an image generated by processing and superposing residual images of a fourth layer sequence and a fifth layer sequence. Further, upsampling is performed on the reconstructed image of the previous round, and the image after the upsampling is sized the same as the filtered image of the current round.

Processing and superposition are performed on the reconstructed image of the previous round and the sharpened image of the current round to generate the reconstructed image of the current round.

In the above embodiment, a plurality of residual images of an image may be quickly reconstructed by the iteration method, so as to obtain the denoised image.

In an embodiment of the present disclosure, a method of generating a reconstructed image of a previous round of a first round of iteration in the multiple rounds of iterations includes: performing first filtering on a first residual image to generate a first filtered image, wherein the first residual image is a residual image of a highest layer sequence; performing second filtering on a second residual image to generate a second filtered image, wherein the first filtering is different from the second filtering, and the second residual image is an image one layer lower the first residual image; performing attenuation on a strong edge region in the second filtered image, and performing enhancement on a weak edge region, so as to generate a corresponding second sharpened image; and obtaining the reconstructed image of the previous round of the first round of iteration in the multiple rounds of iterations according to the first filtered image and the second sharpened image.

If there is no reconstructed image in the first round of iteration during the iterations, the method of generating a reconstructed image of a previous round used in the first round of iteration includes:

acquiring a residual image of a highest layer sequence among a plurality of residual images, for example, for six-layer Laplacian pyramid used in the above iterations, a sixth-layer residual image should be acquired, and performing first filtering on the residual image of this layer, so as to obtain a first filtered image, wherein the present disclosure does not limit specific means of the first filtering, and the first filtering may be bilateral filtering, Gaussian filtering, or the like; acquiring an image one layer lower the residual image of the highest layer sequence, for example, acquiring an image one layer lower the sixth-layer image, i.e., a fifth-layer image, and performing second filtering on this image, so as to generate a second filtered image, wherein the second filtering may be Gaussian filtering and bilateral filtering. When two filtering methods of the first filtering method and the second filtering method are inconsistent, the present disclosure can achieve a better implementation effect. Exemplarily, in an embodiment of the present disclosure, the first filtering is bilateral filtering, and the second filtering is Gaussian filtering.

Attenuation is performed on a strong edge region in the second filtered image, and enhancement is performed on a weak edge region in the second filtered image, so as to generate a corresponding second sharpened image.

Reconstruction is performed according to the second sharpened image and the first filtered image, so as to generate a reconstructed image of previous round used in the first round of iteration. Further, the first filtered image needs to be upsampled before reconstruction, and the amount of upsampling depends on the size of the second residual image, that is, the size of the image generated by upsampling the first filtered image should be consistent with the size of the second filtered image. Exemplarily, when the second filtered image is twice the first filtered image, double upsampling is performed on the first filtered image by a bilinear interpolation method, so as to obtain a first zoomed-in image.

The above reconstruction includes image sharpening, superposition, denoising, etc. Exemplarily, an absolute value of a second superposed image is taken, so as to obtain a second absolute value, and a value is assigned to the second absolute value according to a preset edge detection threshold, so as to generate a strong edge layer and a weak edge layer, respectively. Enhancement is performed on the weak edge layer to generate a weak edge image, and attenuation is performed on the strong edge layer to generate a strong edge image. Adding the weak edge image to the first zoomed-in image to obtain a noisy image, adding the strong edge image to the first zoomed-in image to obtain a guide image, calculating a weight of bilateral filtering using the guide image, and performing bilateral filtering on the noisy image based on the obtained weight, so as to generate the reconstructed image of the previous round used in the first round of iteration.

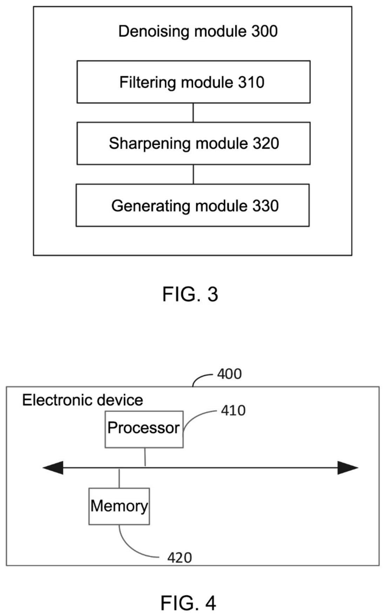

As shown in FIG. 3, FIG. 3 shows a structural block diagram of a denoising module 300 provided in embodiments of the present disclosure. The denoising module 300 includes: a filtering module 310, a sharpening module 320 and a generating module 330.

The filtering module 310 is configured to perform filtering on a residual image of an image, so as to generate a filtered image, wherein the residual image is a difference value of the image at different resolutions, the image is corresponding to at least two residual images, and the at least two residual images have a preset layer sequence relationship therebetween.

The sharpening module 320 is configured to perform enhancement on a weak edge region in the filtered image, and perform attenuation on a strong edge region in the filtered image, so as to generate a sharpened image.

The generating module 330 is configured to obtain a target image according to the first filtered image and the sharpened image.

In an optional embodiment of the present disclosure, the generating module 330 includes:

an image generating submodule, configured to construct a guide image and a noisy image according to the reconstructed image and the sharpened image;

a denoising submodule, configured to perform denoising on the noisy image according to the guide image, so as to obtain a denoised image; and

an upsampling submodule, configured to perform upsampling on the denoised image, so as to obtain the target image.

In an optional embodiment of the present disclosure, the denoising module 300 further includes:

a first value assignment module, configured to assign a value to the filtered image based on a preset threshold interval, so as to acquire the weak edge region; and

a second value assignment module, configured to assign a value to the filtered image based on a preset threshold, so as to acquire the strong edge region.

In an optional embodiment of the present disclosure, the sharpened image includes a weak edge region image, and the sharpening module 320 is specifically configured to perform enhancement on the weak edge region using a preset first scalar, and retain other parts in the filtered image except the weak edge region, so as to generate the weak edge region image.

In an optional embodiment of the present disclosure, the sharpened image includes a strong edge region image, and the sharpening module 320 is specifically configured to perform attenuation on the strong edge region using a preset second scalar, and retain other parts in the filtered image except the strong edge region, so as to generate the strong edge region image.

In an optional embodiment of the present disclosure, the sharpened image includes a weak edge region image and a strong edge region image, and the image generating submodule is specifically configured to add the weak edge region image to the reconstructed image to obtain the noisy image; and add the strong edge region image to the reconstructed image to obtain the guide image.

In an optional embodiment of the present disclosure, the denoising submodule is specifically configured to calculate a weight parameter of bilateral filtering based on the guide image; and perform denoising on the noisy image according to the weight parameter, so as to generate the denoised image.

As shown in FIG. 4, FIG. 4 shows a structural block diagram of an electronic device 400 provided in embodiments of the present disclosure. The electronic device 400 includes: a processor 410 and a memory 420.

The processor 410, the memory 420 and various elements are directly or indirectly electrically connected to each other, so as to implement transmission or interaction of data. For example, these elements may be electrically connected via one or more communication buses or signal lines. The memory 420 is configured to store computer programs, for example, a software function module as shown in FIG. 3, i.e., the denoising module 300. In the above, the denoising module 300 includes at least one software functional module that can be stored in the memory 420 in a form of software or firmware or solidified in an operating system (OS) of the electronic device 400. The processor 410 is configured to execute executable modules stored in the memory 420, such as the software functional module or computer programs included in the denoising module 300.

In the above, the memory 420 may be, but is not limited to, random access memory (RAM), read only memory (ROM), programmable read-only memory (PROM), erasable programmable read-only memory (EPROM), and electric erasable programmable read-only memory (EEPROM).

The processor 410 may be an integrated circuit chip that can process signals. The above processor may be a universal processor, including central processing unit (CPU), network processor (NP), microprocessor and so on, and also may be digital signal processor (DSP), application specific integrated circuit (ASIC), field programmable gate array (FPGA) or other programmable logic devices, discrete gates, transistor logic devices, or discrete hardware components. The processor can realize or execute various methods, steps and logic block diagrams disclosed in the embodiments of the present disclosure. The processor 410 also may be any conventional processor or the like.

Embodiments of the present disclosure further provide a non-volatile computer-readable storage medium (hereinafter abbreviated as storage medium) that stores computer programs, wherein the computer programs, when run by a computer such as the above electronic device 400, executes the above denoising method.

It should be noted that various embodiments in the present description are described in a progressive manner, each embodiment focuses on differences from others, and references can be made between each other for the same or similar parts in various embodiments.

In several embodiments provided in the present disclosure, it should be understood that the apparatus and method disclosed also may be implemented by other methods. The apparatus embodiments described above are merely illustrative. For example, the flowcharts and block diagrams in the drawings show possible system structures, functions and operations of the apparatus, method and computer program product according to multiple embodiments of the present disclosure. In this regard, each block in the flowcharts or block diagrams may represent a part of one module, program segment or code, which contains one or more executable instructions used to achieve a specified logical function. It also should be noted that in some implementations as substitutions, the functions indicated in the blocks also may take effect in an order different from that marked in the drawings. For example, two continuous blocks may be executed substantially in parallel or in a reverse order, which depends on the function involved. It also should be noted that each block in the block diagrams and/or flowcharts or combination of the blocks in the block diagrams and/or flowcharts may be realized by an application specific hardware-based system for executing a specified function or action, or may be realized by a combination of application specific hardware and computer instructions.

Besides, functional modules in each embodiment of the present disclosure may be integrated to form one independent part, or each module may exist independently, or two or more modules are integrated to form an independent part.

If the function is realized in the form of a software functional module and is sold or used as an independent product, it may be stored in a computer-readable storage medium. Based on such understanding, the technical solution of the present disclosure, the part that contributes to the prior art, or part of the solution can be embodied in form of a software product. This computer software product is stored in a computer-readable storage medium and contains several instructions so as to enable one computer device (which may be a personal computer, a laptop, a server, an electronic device or the like) to execute all or part of the steps of the methods described in the embodiments of the present disclosure. The aforementioned computer-readable storage medium can store program codes, and include various media, such as USB flash disk, mobile hard disk, read-only memory (ROM), random access memory (RAM), diskette and compact disk.

The above-mentioned are merely for specific embodiments of the present disclosure, but the scope of protection of the present disclosure is not limited thereto, and any variation or substitution that may be easily conceived by those skilled in the art within the technical scope disclosed in the present disclosure should fall within the scope of protection of the present disclosure. Therefore, the scope of protection of the present disclosure should be determined by the scope of protection of the claims.

**Claims**

1. A denoising method, **characterized by** comprising steps of:

    performing filtering on a residual image of an image to generate a filtered image, wherein the residual image is a difference value of the image at different resolutions, the image is corresponding to at least two residual images, and the at least two residual images have a preset layer sequence relationship therebetween;
    performing enhancement on a weak edge region in the filtered image, and performing attenuation on a strong edge region in the filtered image, so as to generate a sharpened image; and
    obtaining a target image according to a reconstructed image and the sharpened image, wherein the reconstructed image is superposition of all residual images whose layer sequence is before the residual image.

2. The method according to claim 1, wherein the step of obtaining a target image according to the reconstructed image and the sharpened image comprises steps of:

    constructing a guide image and a noisy image according to the reconstructed image and the sharpened image;
    performing denoising on the noisy image according to the guide image, so as to obtain a denoised image; and
    performing upsampling on the denoised image, so as to obtain the target image.

3. The method according to claim 1, **characterized by** further comprising steps of:

    assigning a value to the filtered image based on a preset threshold interval, so as to acquire the weak edge region; and
    assigning a value to the filtered image based on a preset threshold, so as to acquire the strong edge region.

4. The method according to claim 1, wherein the sharpened image comprises a weak edge region image, and the step of performing enhancement on a weak edge region in the filtered image comprises a step of:
    performing enhancement on the weak edge region using a preset first scalar, and retaining other parts in the filtered image except the weak edge region, so as to generate the weak edge region image.

5. The method according to claim 1, wherein the sharpened image comprises a strong edge region image, and the step of performing attenuation on a strong edge region in the filtered image comprises a step of:
    performing attenuation on the strong edge region using a preset second scalar, and retaining other parts in the filtered image except the strong edge region, so as to generate the strong edge region image.

6. The method according to claim 2, wherein the sharpened image comprises a weak edge region image and a strong edge region image, and the step of constructing a guide image and a noisy image according to the reconstructed image and the sharpened image comprises steps of:

adding the weak edge region image to the reconstructed image to obtain the noisy image; and
adding the strong edge region image to the reconstructed image to obtain the guide image.

7. The method according to claim 2, wherein the step of performing denoising on the noisy image according to the guide image so as to obtain a denoised image comprises steps of:

calculating a weight parameter of bilateral filtering based on the guide image; and
performing denoising on the noisy image according to the weight parameter, so as to generate the denoised image.

8. A denoising method, **characterized by** comprising steps of:

acquiring a plurality of residual images of an image, wherein each residual image is a difference value of the image at different resolutions, and the plurality of residual images have a preset layer sequence; and
superposing the plurality of residual images in sequence for multiple times according to the layer sequence, so as to generate a denoised image of the image;
wherein at least one of the multiple times of superposing comprises: performing attenuation on a strong edge region in a filtered image corresponding to a residual image of current layer, and performing enhancement on a weak edge region, so as to generate a sharpened image; and obtaining a reconstructed image of the current layer according to a reconstructed image of an upper layer and the sharpened image.

9. The method according to claim 8, the step of superposing the plurality of residual images in sequence for multiple times according to the layer sequence so as to generate a denoised image comprises steps of:

starting from a target residual image in the plurality of residual images, performing multiple rounds of iterations according to the layer sequence, until iteration of the residual image of a lowest layer sequence is performed, and ceasing the iterations, wherein a reconstructed image of the last round of iteration is the denoised image, and the target residual image refers to a residual image of a third layer sequence;
wherein the iteration comprises: performing filtering on a residual image of a current round of iteration to generate a filtered image of the current round of iteration; performing attenuation on the strong edge region in the filtered image of the current round of iteration, and performing enhancement on the weak edge region to generate a sharpened image of the current round of iteration; and obtaining a reconstructed image of the current round of iteration according to the reconstructed image of the last round of iteration and the sharpened image of the current round of iteration.

10. The method according to claim 9, wherein a method of generating a reconstructed image of a previous round of iteration of a first round of iteration in the multiple rounds of iterations comprises steps of:

performing first filtering on a first residual image to generate a first filtered image, wherein the first residual image is a residual image of a highest layer sequence;
performing second filtering on a second residual image to generate a second filtered image, wherein the first filtering is different from the second filtering, and the second residual image is an image one layer lower the first residual image;
performing attenuation on the strong edge region in the second filtered image, and performing enhancement on the weak edge region, so as to generate a corresponding second sharpened image; and
obtaining the reconstructed image of the previous round of iteration of the first round of iteration in the multiple rounds of iterations according to the first filtered image and the second sharpened image.

11. A denoising apparatus, **characterized by** comprising:

a filtering module, configured to perform filtering on a residual image of an image to generate a filtered image, wherein the residual image is a difference value of the image at different resolutions, the image is corresponding to at least two residual images, and

the at least two residual images have a preset layer sequence relationship therebetween;

a sharpening module, configured to perform enhancement on a weak edge region in the filtered image, and perform attenuation on a strong edge region in the filtered image, so as to generate a sharpened image; and

a generating module, configured to obtain a target image according to the first filtered image and the sharpened image.

12. An electronic device, **characterized by** comprising: a processor and a memory, wherein the processor and the memory communicates with each other through a bus; the memory stores program instructions that are executable by the processor, and the processor calls the program instructions to execute the denoising method according to any one of claims 1-10.

13. A computer-readable storage medium, **characterized by** storing computer program instructions thereon, wherein the computer program instructions, when read and run by a computer, execute the denoising method according to any one of claims 1-10 is executed.

Perform filtering on a residual image of an image to generate a filtered image, wherein the residual image is a difference value of the image at different resolutions, the image is corresponding to at least two residual images, and the at least two residual images have a preset layer sequence relationship therebetween — S110

Perform enhancement on a weak edge region in the filtered image, and perform attenuation on a strong edge region in the filtered image, so as to generate a sharpened image — S120

Obtain a target image according to a reconstructed image and the sharpened image, wherein the reconstructed image is superposition of all residual images whose layer sequence is before the residual image — S130

FIG. 1

Acquire a plurality of residual images of an image, wherein each residual image is a difference value of the image at different resolutions, and the plurality of residual images have a preset layer sequence — S210

Superpose the plurality of residual images in sequence for multiple times according to the layer sequence, so as to generate a denoised image of the image, wherein at least one of the multiple times of superposing includes: perform attenuation on a strong edge region in a filtered image corresponding to a residual image of current layer, and perform enhancement on a weak edge region, so as to generate a sharpened image; and obtain a reconstructed image of the current layer according to a reconstructed image one layer upper the sharpened image — S220

FIG. 2

Denoising module 300

Filtering module 310

Sharpening module 320

Generating module 330

FIG. 3

400

Electronic device

Processor 410

Memory

420

FIG. 4

## INTERNATIONAL SEARCH REPORT

| International application No. |
| --- |
| **PCT/CN2024/080401** |

**A. CLASSIFICATION OF SUBJECT MATTER**

G06T 5/70(2024.01)i;  G06T 5/00(2024.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, IEEE, CNKI: 降噪, 去噪, 噪声, 图像, 滤波, 残差, 分辨率, 差值, 增强, 边缘, 弱边缘, 强边缘, 锐化, 叠加, 层序, 层, noise reduction, de-noise, noise, image, filter, residual, resolution, difference, enhance, edge, weak edge, strong edge, sharpen, superposition, layer order, layer

**C. DOCUMENTS CONSIDERED TO BE RELEVANT**

| Category* | Citation of document, with indication, where appropriate, of the relevant passages | Relevant to claim No. |
| --- | --- | --- |
| A | CN 114663302 A (BEIJING JIIGAN TECHNOLOGY CO., LTD.) 24 June 2022 (2022-06-24)<br>description, paragraphs 4-52 | 1-13 |
| A | CN 113592776 A (MEGVII TECHNOLOGY LIMITED et al.) 02 November 2021 (2021-11-02)<br>entire document | 1-13 |
| A | CN 115311242 A (HEFEI I-TEK OPTOELECTRONICS CO., LTD.) 08 November 2022 (2022-11-08)<br>entire document | 1-13 |
| A | CN 115660976 A (GUANGDONG OPPO MOBILE TELECOMMUNICATIONS CORP., LTD.) 31 January 2023 (2023-01-31)<br>entire document | 1-13 |
| A | US 2023133074 A1 (AGFA NV) 04 May 2023 (2023-05-04)<br>entire document | 1-13 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 October 2024** | **24 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/080401**

### C. DOCUMENTS CONSIDERED TO BE RELEVANT

| Category* | Citation of document, with indication, where appropriate, of the relevant passages | Relevant to claim No. |
|---|---|---|
| A | WO 2018099136 A1 (SANECHIPS TECHNOLOGY CO., LTD.) 07 June 2018 (2018-06-07) entire document | 1-13 |

**INTERNATIONAL SEARCH REPORT**
Information on patent family members

International application No.

**PCT/CN2024/080401**

| Patent document cited in search report | | | Publication date (day/month/year) | Patent family member(s) | | | Publication date (day/month/year) |
|---|---|---|---|---|---|---|---|
| CN | 114663302 | A | 24 June 2022 | None | | | |
| CN | 113592776 | A | 02 November 2021 | None | | | |
| CN | 115311242 | A | 08 November 2022 | None | | | |
| CN | 115660976 | A | 31 January 2023 | None | | | |
| US | 2023133074 | A1 | 04 May 2023 | WO | 2021069557 | A1 | 15 April 2021 |
| | | | | EP | 3806027 | A1 | 14 April 2021 |
| WO | 2018099136 | A1 | 07 June 2018 | CN | 108122206 | A | 05 June 2018 |

Form PCT/ISA/210 (patent family annex) (July 2022)